# EUROPÄISCHE PATENTSCHRIFT

(11) **EP 2 563 628 B1**
(45) Veröffentlichungstag und Bekanntmachung des Hinweises auf die Patenterteilung: **09.07.2014**
(21) Anmeldenummer: 10718955.7
(22) Anmeldetag: 29.04.2010
(51) Int. Cl.: B60S 3/06

(54) **FAHRZEUGWASCHANLAGE**
CAR WASHING APPARATUS
DISPOSITIF DE LAVAGE DE VOITURE

(43) Veröffentlichungstag der Anmeldung: 06.03.2013
(73) Patentinhaber: Alfred Kärcher GmbH & Co. KG, 71364 Winnenden (DE)
(72) Erfinder: HEID, Claus, 70186 Stuttgart (DE); SPECKMAIER, André, 71543 Wüstenrot (DE); VEITZ, Yann, 71665 Vaihingen/Enz (DE); FEISTKORN, Ingo, 67159 Friedelsheim (DE); KNISEL, Bernd, 71229 Leonberg (DE)
(74) Vertreter: Hoeger, Stellrecht & Partner Patentanwälte
(86) Internationale Anmeldenummer: PCT/EP2010/055858
(87) Internationale Veröffentlichungsnummer: WO 2011/134523

(56) Entgegenhaltungen:
- DE-A1-102006 027 308
- US-A- 4 495 667

## Beschreibung

Die Erfindung betrifft eine Fahrzeugwaschanlage mit einer ersten und einer zweiten Stütze, an denen mindestens ein Behandlungswerkzeug mittels eines ersten und eines zweiten Tragmittels höhenverstellbar gehalten ist, und mit einer Tragmittelantriebseinrichtung, von der aus sich die Tragmittel über oberseitig an den Stützen angeordnete Umlenkelemente zu dem Behandlungswerkzeug erstrecken, wobei ein Tragmittel oberhalb des Behandlungswerkzeugs von mindestens einem an der ersten Stütze angeordneten Umlenkelement zu mindestens einem an der zweiten Stütze angeordneten Umlenkelement verläuft.

Derartige Fahrzeugwaschanlagen sind aus der DE 10 2006 027 308 A1 bekannt. Mit ihrer Hilfe kann ein Fahrzeug gereinigt werden. Die Fahrzeugwaschanlage umfasst mindestens ein höhenverstellbares Behandlungswerkzeug, beispielsweise eine Reinigungsbürste, einen Düsenbalken, einen Trockner oder dgl. Das Behandlungswerkzeug ist an zwei Tragmitteln gehalten, die mittels einer Tragmittelantriebseinrichtung bewegt werden können, um das Behandlungswerkzeug anzuheben und abzusetzen. An Umlenkelementen, die an den oberen Enden der Stützen angeordnet sind, werden die Tragmittel umgelenkt. Sie können beispielsweise jeweils an einer einer Stütze zugewandten Stirnseite des Behandlungswerkzeugs fixiert sein und ausgehend von der Stirnseite vertikal nach oben verlaufen bis zu einem Umlenkelement, an dem sie in Richtung auf die Tragmittelantriebseinrichtung umgelenkt werden. Eines der Tragmittel verläuft oberhalb des Behandlungswerkzeugs zwischen den beiden Stützen, um mit der Tragmittelantriebseinrichtung zusammenwirken zu können.

Derartige Fahrzeugwaschanlagen werden üblicherweise in einer Waschhalle angeordnet und müssen daher in ihrer Dimensionierung, insbesondere in ihrer Höhe, an die Dimensionen der Waschhalle angepasst werden. Insbesondere die Höhe der Fahrzeugwaschanlage und damit die maximale Höhe, die das mindestens eine höhenverstellbare Behandlungswerkzeug einnehmen kann, wird derart an die Höhe der Waschhalle angepasst, dass die Waschhallenhöhe optimal ausgenutzt wird und möglichst hohe Fahrzeuge gereinigt werden können.

Die Anpassung der Fahrzeugwaschanlage an die vorgegebene Höhe der Waschhalle erfolgt üblicherweise dadurch, dass Stützen mit der geeigneten Höhe verwendet werden. Dies ist mit dem Nachteil verbunden, dass der Hersteller der Fahrzeugwaschanlage eine Vielzahl unterschiedlich hoher Stützen bereithalten muss.

Aufgabe der vorliegenden Erfindung ist es, eine Fahrzeugwaschanlage der eingangs genannten Art derart weiterzubilden, dass sie auf einfache Weise an die Höhe einer Waschhalle angepasst werden kann.

Diese Aufgabe wird bei einer Fahrzeugwaschanlage der gattungsgemäßen Art erfindungsgemäß dadurch gelöst, dass die Umlenkelemente an Zwischenteilen gelagert sind, die in unterschiedlichen vertikalen Stellungen an den Stützen festlegbar sind.

Mittels der erfindungsgemäß zum Einsatz kommenden Zwischenteile können die Umlenkelemente auf einfache Weise in unterschiedlichen vertikalen Stellungen festgelegt werden. Die Umlenkelemente bilden die höchsten Bauteile der erfindungsgemäßen Fahrzeugwaschanlage. Die Zwischenteile, an denen die Umlenkelemente gelagert sind, bilden in ihrer effektiven Länge variable vertikale Verlängerungen der Stützen. Dadurch können auf sehr einfache Weise unterschiedliche Höhen für die Fahrzeugwaschanlage erzielt werden, ohne dass hierzu unterschiedliche Stützen zum Einsatz kommen müssen. Mittels der Zwischenteile werden die Umlenkelemente, soweit dies die Waschhalle ermöglicht, in maximaler Höhe an den Stützen festgelegt, oder aber die Umlenkelemente werden in etwas geringerer Höhe an den Stützen festgelegt, sofern dies die Waschhalle erforderlich macht. Die Festlegung der Umlenkelemente in der gewünschten Höhe erfolgt mittels der Zwischenteile. Somit lässt sich die Fahrzeugwaschanlage auf einfache Weise an die Höhe der jeweiligen Waschhalle anpassen.

Eine besonders einfache Montage wird bei einer vorteilhaften Ausführungsform der Erfindung dadurch erzielt, dass die Zwischenteile in vorgebbaren Stellungen an den Stützen festlegbar sind. Die Stellungen können beispielsweise durch vorgegebene Verbindungselemente definiert werden, so dass bei der Montage der Fahrzeugwaschanlage die für die jeweilige Höhe optimalen Verbindungselemente zur Verbindung der Zwischenteile mit den Stützen zum Einsatz kommen können.

Es kann vorgesehen sein, dass die Zwischenteile mit den Stützen lösbar verbindbar sind. Insbesondere eine Schraubverbindung kann zum Einsatz kommen. Hierbei kann vorgesehen sein, dass die Zwischenteile eine sich in vertikaler Richtung erstreckende Reihe von Löchern aufweisen, durch die Verbindungsschrauben hindurchgeführt werden können, um die Zwischenteile mit den Stützen zu verschrauben. Bei der Montage der Fahrzeugwaschanlage können dann die für eine optimale Höhe geeigneten Löcher für die Verschraubung der Zwischenteile verwendet werden.

Bei einer bevorzugten Ausgestaltung der erfindungsgemäßen Fahrzeugwaschanlage sind die Stützen hohl ausgestaltet und die Zwischenteile tauchen oberseitig in die Stützen ein. Die Zwischenteile bilden somit eine Art Verlängerungsteil der Stützen, wobei sie oberseitig soweit aus den Stützen herausragen, wie dies durch die jeweilige Waschhalle vorgegeben ist. Die Umlenkelemente sind an den freien, den Stützen abgewandten Enden der Zwischenteile angeordnet.

Günstigerweise sind die Umlenkelemente als frei drehbare Umlenkrollen ausgestaltet.

Es kann vorgesehen sein, dass an jedem Zwischenteil nur ein einziges Umlenkelement angeordnet ist. Von Vorteil im Hinblick auf die Führung der Tragmittel ist es jedoch, wenn an mindestens einem Zwischenteil mehrere Umlenkelemente gelagert sind. So kann beispielsweise vorgesehen sein, dass an jedem Zwischenteil zumindest zwei Umlenkrollen frei drehbar gelagert sind.

Günstig ist es, wenn die Zwischenteile an ihrem freien Ende jeweils ein Lagerteil tragen, an dem zumindest eine Umlenkrolle drehbar gelagert ist.

Die Lagerteile können beispielsweise U-förmig ausgestaltet sein und zwei parallel zueinander ausgerichtete Schenkel sowie einen die Schenkel miteinander verbindenden Steg aufweisen, wobei die Umlenkrollen an den Schenkeln drehbar gelagert sind.

Vorzugsweise sind an mindestens einem Lagerteil zumindest zwei Umlenkrollen drehbar gelagert.

In vielen Fällen ist das mindestens eine höhenverstellbar gehaltene Behandlungswerkzeug von einer Spritzschutzeinrichtung abgedeckt. Die Spritzschutzeinrichtung stellt sicher, dass Spritzwasser nicht ohne Weiteres von dem mindestens einen Behandlungswerkzeug zur Decke der Waschhalle gelangen kann.

Günstig ist es, wenn die das mindestens eine höhenverstellbare Behandlungselement abdeckende Spritzschutzeinrichtung an den Zwischenteilen gehalten ist. Die Zwischenteile lagern bei einer derartigen Ausgestaltung der erfindungsgemäßen Fahrzeugwaschanlage nicht nur die Umlenkelemente sondern zusätzlich auch die Spritzschutzeinrichtung. Die Lage der Spritzschutzeinrichtung kann somit ebenso wie die Lage der Umlenkelemente auf einfache Weise an die vorgegebene Höhe einer Waschhalle angepasst werden, indem die Zwischenteile in geeigneter Stellung an den Stützen festgelegt werden.

Die Spritzschutzeinrichtung weist bei einer bevorzugten Ausgestaltung der Erfindung einen an den Zwischenteilen fixierten Spritzschutzrahmen auf, an dem eine Spritzschutzplane gehalten ist. Der Spritzschutzrahmen kann beispielsweise zwei kreisbogenförmige Seitenteile aufweisen, die jeweils an einem Zwischenteil gehalten sind, sowie mehrere Querteile, die die beiden Seitenteile miteinander verbinden und parallel zur Längsachse des höhenverstellbaren Behandlungswerkzeugs ausgerichtet sind.

Besonders günstig ist es, wenn die Festlegung des Spritzschutzrahmens an den Stützen der Fahrzeugwaschanlage nicht nur mittels der Zwischenteile erfolgt, sondern wenn zusätzliche Ausleger zum Einsatz kommen, die quer zur Längsachse des höhenverstellbaren Behandlungswerkzeugs und quer zur Längsachse der Stützen ausgerichtet sind.

Die Tragmittelantriebseinrichtung, die über die Tragmittel mit dem mindestens einen höhenverstellbaren Behandlungswerkzeug gekoppelt ist, kann beispielsweise eine Treibscheibe umfassen, die zur Höhenverstellung des mindestens einen Behandlungswerkzeugs von einem Motor in Drehung versetzt werden kann und über die die beiden Tragmittel herumgeführt sind, und zusätzlich kann die Tragmittelantriebseinrichtung ein Gegengewicht aufweisen, von dem aus sich die beiden Tragmittel über die Treibscheibe und die Umlenkelemente bis zum höhenverstellbaren Behandlungswerkzeug erstrecken.

Alternativ kann vorgesehen sein, dass die Tragmittelantriebseinrichtung eine Wicklungseinrichtung aufweist mit einer Wickeltrommel, auf die die Tragmittel aufwickelbar sind. Die Wickeltrommel kann von einem Motor in Drehung versetzt werden, um die Tragmittel zur Höhenverstellung des mindestens einen Behandlungswerkzeugs aufzuwickeln oder abzuwickeln.

Die Tragmittel sind vorzugsweise als Riemen ausgestaltet.

Günstigerweise ist die Wickeleinrichtung unterhalb der Umlenkelemente an einem oberen Endbereich einer Stütze angeordnet.

Das mindestens eine höhenverstellbare Behandlungswerkzeug kann beispielsweise in Form einer Dachbürste ausgestaltet sein, die um eine Drehachse drehbar an Schlitten gelagert ist, die an den Stützen höhenverstellbar gehalten sind und an denen jeweils ein Tragmittel festgelegt ist. Die Schlitten können nach Art eines Laufwagens ausgestaltet sein, der an einer Führungsschiene verschiebbar gehalten ist.

Die nachfolgende Beschreibung einer bevorzugten Ausführungsform der Erfindung dient im Zusammenhang mit der Zeichnung der näheren Erläuterung.

Es zeigen:
- Figur 1:: eine schematische Vorderansicht einer erfindungsgemäßen Fahrzeugwaschanlage mit zwei vertikal ausgerichteten Seitenbürsten und einer von einer Spritzschutzeinrichtung abgedeckten horizontalen Dachbürste;
- Figur 2:: eine Vorderansicht auf die Fahrzeugwaschanlage aus Figur 1, wobei eine Spritzschutzplane der Spritzschutzeinrichtung entfernt wurde;
- Figur 3:: eine perspektivische Teilansicht auf einen oberen Endbereich einer Stütze der Fahrzeugwaschanlage aus Figur 2 schräg von vorne;
- Figur 4:: eine perspektivische Teilansicht auf den oberen Endbereich der Stütze aus Figur 2 schräg von hinten mit in einer oberen Stellung festgelegten Umlenkelementen bei entfernter Dachbürste; und
- Figur 5:: eine perspektivische Teilansicht auf den oberen Endbereich der Stütze entsprechend Figur 4, wobei die Umlenkelemente in einer unteren Position festgelegt sind.

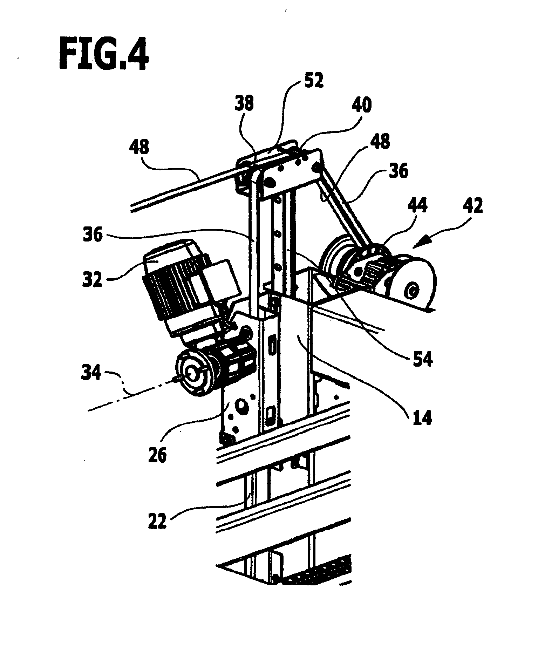

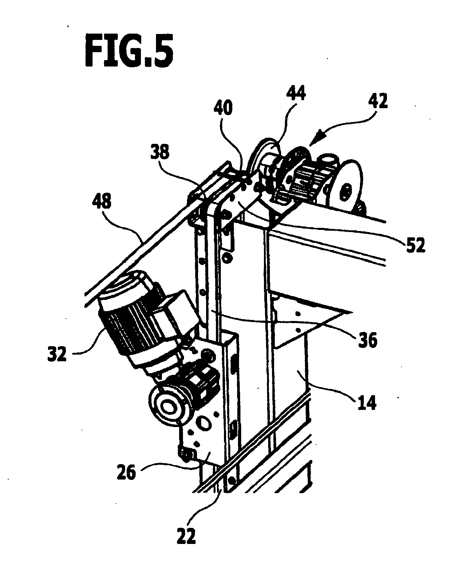

In der Zeichnung ist schematisch eine erfindungsgemäße Fahrzeugwaschanlage 10 dargestellt mit einem Waschportal 12, das eine erste vertikale Stütze 14 und eine zweite vertikale Stütze 16 aufweist. An ihren einander zugewandten Innenseiten 18 bzw. 20 tragen die Stützen 14, 16 jeweils eine Führungsschiene 22 bzw. 24. An den Führungsschienen 22, 24 ist jeweils eine Lagervorrichtung in Form eines Schlittens 26 bzw. 28 verschiebbar gehalten. An den Schlitten 26, 28 ist ein höhenverstellbares Behandlungswerkzeug in Form einer Dachbürste 30 drehbar gehalten. Die Dachbürste kann von einem Bürstenmotor 32 um ihre horizontal ausgerichtete Drehachse 34 in Drehung versetzt werden. Der Bürstenmotor 32 ist am Schlitten 26 gehalten und kann zusammen mit der Dachbürste 30 in der Höhe verstellt werden. Dies wird insbesondere aus den Figuren 4 und 5 deutlich, in denen die Dachbürste 30 zur Erzielung einer besseren Übersicht nicht dargestellt ist.

Der erste Schlitten 26 ist an einem ersten Tragmittel in Form eines ersten Tragriemens 36 gehalten, der sich ausgehend vom ersten Schlitten 26 zunächst in vertikaler Richtung nach oben erstreckt und oberhalb der ersten Stütze 14 an Umlenkelementen in Form einer ersten Umlenkrolle 38 und einer zweiten Umlenkrolle 40 umgelenkt wird in Richtung auf eine Tragmittelantriebseinrichtung, die in Form einer Wicklungseinrichtung 42 am oberen Endbereich der vertikalen Stütze 14 an deren der Stütze 16 abgewandten Außenseite angeordnet ist. Die Wicklungseinrichtung 42 weist eine Wickeltrommel 44 auf, die von einem Antriebsmotor 46 in Drehung versetzt werden kann. Um den ersten Schlitten 26 anzuheben, kann der erste Tragriemen 36 auf die Wickeltrommel 44 aufgewickelt werden, und um den ersten Schlitten 26 abzusenken kann der erste Tragriemen 36 von der Wickeltrommel 44 abgewickelt werden.

Der zweite Schlitten 28 ist an einem zweiten Tragmittel in Form eines zweiten Tragriemens 48 gehalten. Der zweite Tragriemen 48 verläuft ausgehend vom zweiten Schlitten 28 zunächst vertikal nach oben und wird oberhalb der zweiten Stütze 16 an einem Umlenkelement in Form einer dritten Umlenkrolle 50 in Richtung auf die Stütze 14 umgelenkt. Der zweite Tragriemen 48 verläuft dann oberhalb der Dachbürste 30 bis zur ersten Umlenkrolle 38 und zur zweiten Umlenkrolle 40, um anschließend auf die Wickeltrommel 44 aufgewickelt zu werden. Mittels der Wickeltrommel 44 kann somit auch der zweite Schlitten 28 durch Aufwickeln und Abwickeln des zweiten Tragriemens 48 in seiner Höhe verstellt werden.

Die Verstellung der Schlitten 26 und 28 über die beiden Tragriemen 36, 48 mittels der Wickeltrommel 44 ermöglicht es, die Dachbürste 30 anzuheben und abzusenken.

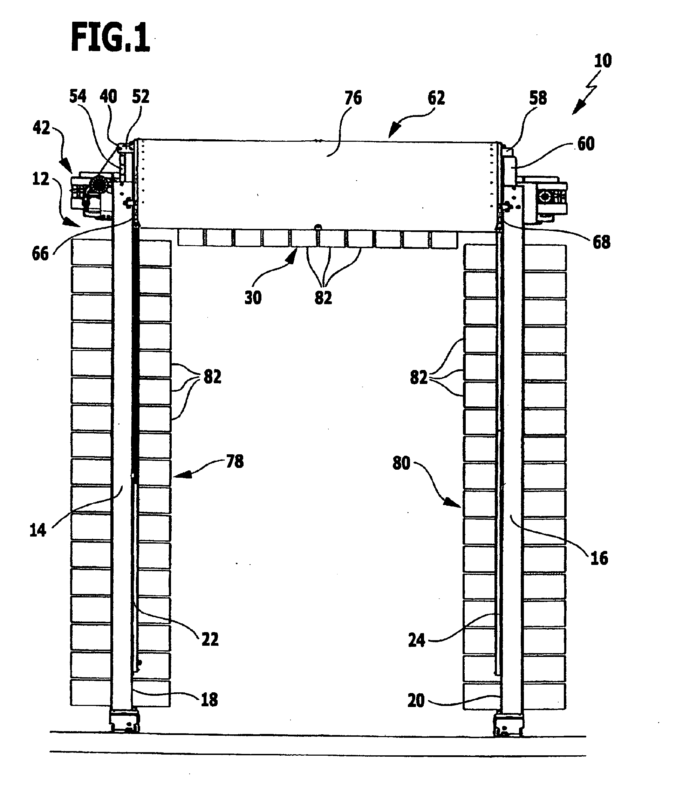

Die erste Umlenkrolle 38 und die zweite Umlenkrolle 40 sind an einem ersten Lagerteil 52 frei drehbar gelagert, das am freien Ende eines ersten Zwischenteils 54 gehalten ist. Das erste Zwischenteil 54 taucht oberseitig in die als Hohlprofil ausgestaltete erste Stütze 14 ein und kann in unterschiedlichen Stellungen mittels Verbindungsschrauben 56 mit der ersten Stütze 14 verschraubt werden. In den Figuren 1 bis 4 ist das erste Zwischenteil 54 in einer oberen Position dargestellt, in der es so weit wie möglich aus der ersten Stütze 14 herausragt, und in Figur 5 ist das erste Zwischenteil 54 in einer unteren Position dargestellt, in der es so weit wie möglich in die erste Stütze 14 eintaucht. Die Lage, die die erste Umlenkrolle 38 und die zweite Umlenkrolle 40 einnehmen, kann somit mittels des ersten Zwischenteils 54 auf einfache Weise verändert werden, ohne dass hierzu eine Veränderung der ersten Stütze 14 erforderlich ist.

Die dritte Umlenkrolle 50 ist an einem zweiten Lagerteil 58 frei drehbar gelagert, das am freien Ende eines zweiten Zwischenteils 60 gehalten ist. Das zweite Zwischenteil 60 ist ähnlich ausgebildet wie das erste Zwischenteil 54, es taucht oberseitig in die als Hohlprofil ausgestaltete zweite Stütze 16 ein und kann in entsprechender Weise wie das erste Zwischenteil 54 in unterschiedlichen vertikalen Stellungen an der zweiten Stütze 16 festgelegt werden, um die Lage der zweiten Umlenkrolle 40 auf einfache Weise zu verändern, ohne dass hierzu eine Veränderung der zweiten Stütze 16 erforderlich ist.

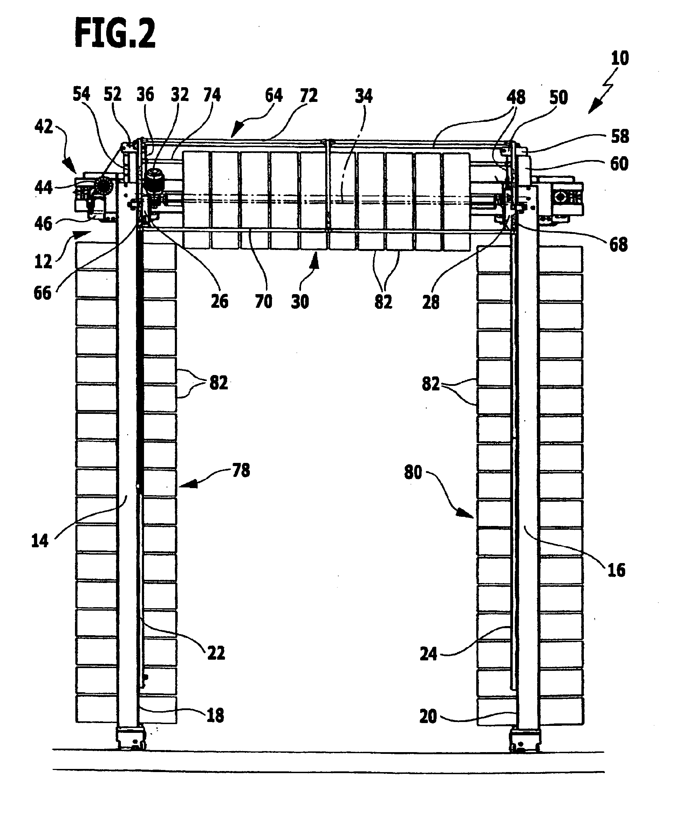

Wie insbesondere aus den Figuren 1 und 2 deutlich wird, ist die Dachbürste 30 von einer Spritzschutzeinrichtung 62 abgedeckt. Die Spritzschutzeinrichtung 62 umfasst einen Spritzschutzrahmen 64 mit zwei kreisbogenförmigen Seitenteilen 66, 68, die am ersten Lagerteil 52 bzw. am zweiten Lagerteil 58 festgelegt sind und die über drei geradlinige Querteile 70, 72, 74 miteinander verbunden sind. Am Spritzschutzrahmen 64 ist eine Spritzschutzplane 76 gehalten, die in Figur 1 dargestellt ist. In den restlichen Figuren ist die Spritzschutzplane 76 zur Erzielung einer besseren Übersicht.nicht dargestellt.

Da der Spritzschutzrahmen 64 an den Lagerteilen 52 und 58 gehalten ist, kann er zusammen mit den Umlenkrollen 38, 40 und 50 auf einfache Weise in seiner vertikalen Stellung verändert werden, indem die Zwischenteile 54, 60 in der jeweils gewünschten Position an den Stützen 14, 16 festgelegt werden.

Zusätzlich zu der Dachbürste 30 weist die Fahrzeugwaschanlage 10 noch vertikal ausgerichtete Seitenbürsten 78, 80 auf. Die Seitenbürsten 78, 80 sind ebenso wie die Dachbürste 30 mit Waschelementen in Form von Vliesstreifen 82 ausgestattet. Alternativ könnten die Seitenbürsten 78, 80 und die Dachbürste 30 auch mit Borsten ausgestattet sein.

Mittels der Seitenbürsten 78, 80 können die Seitenpartien eines Fahrzeugs gereinigt werden, und mittels der Dachbürste 30 kann die Motorhaube, das Dach sowie der Kofferraum eines Fahrzeugs gereinigt werden. Hierzu kann die Dachbürste 30 in ihrer Höhe verstellt werden, wie dies voranstehend bereits erläutert wurde. Das gesamte Waschportal 12 kann an einem stehenden Fahrzeug entlang geführt werden. Alternativ kann vorgesehen sein, dass das Waschportal 12 unbeweglich ist und stattdessen das Fahrzeug entlang des Waschportals 12 verfahren wird.

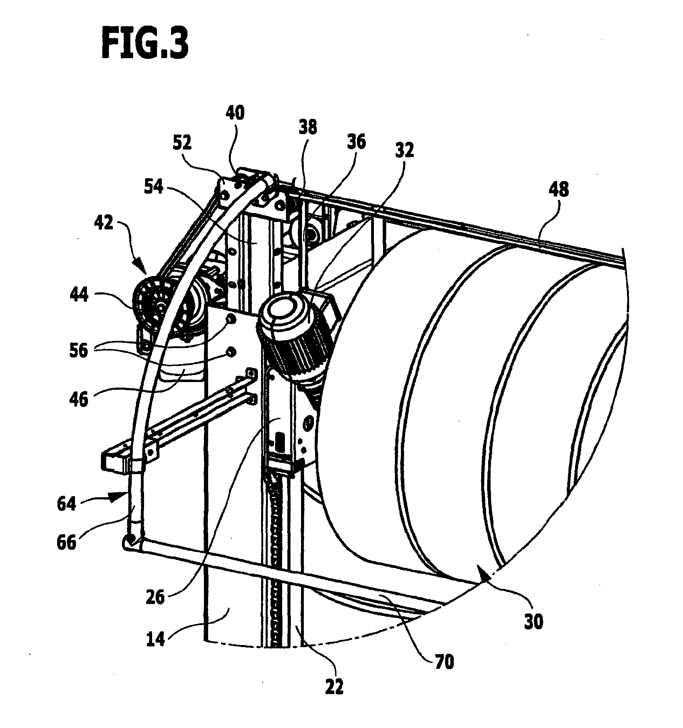

Die Fahrzeugwaschanlage 10 wird üblicherweise in einer Waschhalle eines Gebäudes angeordnet. Sofern es die Höhe der Waschhalle erlaubt, werden die Zwischenteile 54 und 60 in ihrer in den Figuren 3 und 4 dargestellten obersten Position mit den Stützen 14 bzw. 16 verschraubt, so dass die Umlenkrollen 38, 40 und 50 ebenso wie der Spritzschutzrahmen 64 eine oberste Stellung einnehmen und die Dachbürste 30 bis in Höhe des oberen Endes der Stützen 14, 16 angehoben werden kann. Falls jedoch die Waschhalle eine geringere Höhe aufweist, können die Zwischenteile 54, 60 eine tiefere Stellung einnehmen, indem sie weiter in die Stützen 14 bzw. 16 eintauchen. Die Umlenkrollen 38, 40 und 50 nehmen dann ebenso wie der Spritzschutzrahmen 64 eine tiefere Stellung ein und die Dachbürste 30 kann dann nur bis zu einer geringeren Höhe angehoben werden. Die maximale Höhe, die die Dachbürste 30 einnehmen kann, kann durch einen Endschalter vorgegeben werden, der beispielsweise in Form eines induktiven Näherungsschalters ausgestaltet sein kann und der in Anpassung an die Lage der Zwischenteile 54 und 60 in unterschiedlicher Stellung an einer Stütze festgelegt werden kann. Erreicht der Schlitten 26 den Endschalter, so ändert sich dessen Schaltstellung und die Wicklungseinrichtung 42 wird ausgeschaltet, so dass die Dachbürste 30 nicht weiter angehoben werden kann.

Die erfindungsgemäße Fahrzeugwaschanlage 10 ermöglicht eine einfache Anpassung an die vorgegebene Höhe einer Waschhalle, ohne dass hierzu die vertikalen Stützen 14 und 16 umgestaltet werden müssen. Zur Höhenanpassung der Fahrzeugwaschanlage 10 ist es lediglich erforderlich, die vertikale Stellung der Zwischenteile 54 und 60 an die Höhe der Waschhalle anzupassen.

## Patentansprüche

1. Fahrzeugwaschanlage mit einer ersten und einer zweiten Stütze (14, 16), an denen mindestens ein Behandlungswerkzeug (30) mittels eines ersten und eines zweiten Tragmittels (36, 48) höhenverstellbar gehalten ist, und mit einer Tragmittelantriebseinrichtung (42), von der aus sich die Tragmittel über oberseitig an den Stützen angeordnete Umlenkelemente (38, 40, 50) zu dem Behandlungswerkzeug (30) erstrecken, wobei ein Tragmittel (48) von mindestens einem an der ersten Stütze (14) angeordneten Umlenkelement (38, 40) zu mindestens einem an der zweiten Stütze (16) angeordneten Umlenkelement (50) verläuft, **dadurch gekennzeichnet, dass** die Umlenkelemente (38, 40, 50) an Zwischenteilen (54, 60) gelagert sind, die in unterschiedlichen vertikalen Stellungen an den Stützen (14, 16) festlegbar sind.

2. Fahrzeugwaschanlage nach Anspruch 1, **dadurch gekennzeichnet, dass** die Zwischenteile (54, 60) in vorgebbaren Stellungen an den Stützen (14, 16) festlegbar sind.

3. Fahrzeugwaschanlage nach Anspruch 1 oder 2, **dadurch gekennzeichnet, dass** die Zwischenteile (54, 60) mit den Stützen (14, 16) lösbar verbindbar sind.

4. Fahrzeugwaschanlage nach einem der voranstehenden Ansprüche, **dadurch gekennzeichnet, dass** die Stützen (14, 16) hohl ausgestaltet sind und die Zwischenteile (54, 60) in die Stützen (14, 16) eintauchen.

5. Fahrzeugwaschanlage nach einem der voranstehenden Ansprüche, **dadurch gekennzeichnet, dass** die Umlenkelemente als frei drehbar gelagerte Umlenkrollen (38, 40, 50) ausgestaltet sind.

6. Fahrzeugwaschanlage nach Anspruch 5, **dadurch gekennzeichnet, dass** die Zwischenteile (54, 60) an ihrem freien Ende jeweils ein Lagerteil (52, 58) tragen, an dem zumindest eine Umlenkrolle (38, 40, 50) drehbar gelagert ist.

7. Fahrzeugwaschanlage nach Anspruch 6, **dadurch gekennzeichnet, dass** an mindestens einem Lagerteil (52) zumindest zwei Umlenkrollen (38, 40) drehbar gelagert sind.

8. Fahrzeugwaschanlage nach einem der voranstehenden Ansprüche, **dadurch gekennzeichnet, dass** an den Zwischenteilen (54, 60) eine Spritzschutzeinrichtung (62) gehalten ist.

9. Fahrzeugwaschanlage nach Anspruch 8, **dadurch gekennzeichnet, dass** die Spritzschutzeinrichtung (62) einen Spritzschutzrahmen (64) aufweist, an dem eine Spritzschutzplane (76) gehalten ist.

10. Fahrzeugwaschanlage nach einem der voranstehenden Ansprüche, **dadurch gekennzeichnet, dass** die Tragmittelantriebseinrichtung eine Wicklungseinrichtung (42) aufweist mit einer Wickeltrommel (44), auf die die Tragmittel (36, 48) aufwickelbar sind.

11. Fahrzeugwaschanlage nach Anspruch 10, **dadurch gekennzeichnet, dass** die Wickeleinrichtung (42) unterhalb der Umlenkelemente (38, 40, 50) an einem oberen Endbereich einer Stütze (14) angeordnet ist.

## Claims

1. Vehicle washing installation having a first and a second support (14, 16) on which at least one treatment tool (30) is mounted in a height-adjustable manner by means of a first and a second carrying means (36, 48), and having a carrying means drive device (42) from which the carrying means extend to the treatment tool (30) via deflection elements (38, 40, 50) situated on the top of the supports, one carrying means (48) extending from at least one deflection element (38, 40) situated on the first support (14) to at least one deflection element (50) situated on the second support (16), **characterized in that** the deflection elements (38, 40, 50) are mounted on intermediate parts (54, 60) which are fixable to the supports (14, 16) at different vertical positions.

2. Vehicle washing installation according to claim 1, **characterized in that** the intermediate parts (54, 60) are fixable to the supports (14, 16) at predeterminable positions.

3. Vehicle washing installation according to claim 1 or 2, **characterized in that** the intermediate parts (54, 60) are releasably connectable to the supports (14, 16).

4. Vehicle washing installation according to one of the preceding claims, **characterized in that** the supports (14, 16) are hollow, and the intermediate parts (54, 60) engage into the supports (14, 16).

5. Vehicle washing installation according to one of the preceding claims, **characterized in that** the deflection elements are formed as freely rotatably mounted deflection rollers (38, 40, 50).

6. Vehicle washing installation according to claim 5, **characterized in that** the intermediate parts (54, 60) in each case carry at their free end a bearing part (52, 58) on which at least one deflection roller (38, 40, 50) is rotatably mounted.

7. Vehicle washing installation according to claim 6, **characterized in that** at least two deflection rollers (38, 40) are rotatably mounted on at least one bearing part (52).

8. Vehicle washing installation according to one of the preceding claims, **characterized in that** a splash guard (62) is mounted on the intermediate parts (54, 60).

9. Vehicle washing installation according to claim 8, **characterized in that** the splash guard (62) has a splash guard frame (64) on which a splash guard awning (76) is mounted.

10. Vehicle washing installation according to one of the preceding claims, **characterized in that** the carrying means drive device has a winding device (42) having a winding drum (44) onto which the carrying means (36, 48) can be wound.

11. Vehicle washing installation according to claim 10, **characterized in that** the winding device (42) is situated beneath the deflection elements (38, 40, 50) at an upper end region of a support (14).

## Revendications

1. Installation de lavage de véhicule pourvue d'un premier et d'un second support (14, 16), sur lesquels au moins un outil de traitement (30) est retenu de manière réglable en hauteur à l'aide d'un premier et d'un second moyen de support (36, 48), et d'un dispositif d'entraînement de moyen de support (42), à partir duquel les moyens de support s'étendent en direction de l'outil de traitement (30) par l'intermédiaire d'éléments de déviation (38, 40, 50) disposés sur la partie supérieure des supports, un moyen de support (48) s'étendant d'au moins un élément de déviation (38, 40) disposé sur le premier support (14) à au moins un élément de déviation (50) disposé sur le second support (16), **caractérisée en ce que** les éléments de déviation (38, 40, 50) sont montés sur des parties intermédiaires (54, 60), lesquelles peuvent être fixés dans différentes positions verticales sur les supports (14, 16).

2. Installation de lavage de véhicule selon la revendication 1, **caractérisée en ce que** les parties intermédiaires (54, 60) peuvent être fixées sur les supports (14, 16) dans des positions pouvant être prédéfinies.

3. Installation de lavage de véhicule selon la revendication 1 ou 2, **caractérisée en ce que** les parties intermédiaires (54, 60) peuvent être reliées de manière détachable aux supports (14, 16).

4. Installation de lavage de véhicule selon l'une quelconque des revendications précédentes, **caractérisée en ce que** les supports (14, 16) sont creux et les parties intermédiaires (54, 60) s'enfoncent dans les supports (14, 16).

5. Installation de lavage de véhicule selon l'une quelconque des revendications précédentes, **caractérisée en ce que** les éléments de déviation sont conçus sous la forme de rouleaux de déviation (38, 40, 50) montés de manière librement rotative.

6. Installation de lavage de véhicule selon la revendication 5, **caractérisée en ce que** les parties intermédiaires (54, 60) portent à leur extrémité libre respectivement une partie de support (52, 58) sur laquelle au moins un rouleau de déviation (38, 40, 50) est monté rotatif.

7. Installation de lavage de véhicule selon la revendication 6, **caractérisée en ce qu'**au moins deux rouleaux de déviation (38, 40) sont montés rotatifs sur au moins une partie de support (52).

8. Installation de lavage de véhicule selon l'une quelconque des revendications précédentes, **caractérisée en ce qu'**un dispositif anti-éclaboussures (62) est retenu sur les parties intermédiaires (54, 60).

9. Installation de lavage de véhicule selon la revendication 8, **caractérisée en ce que** le dispositif anti-éclaboussures (62) comprend un cadre anti-éclaboussures (64) sur lequel une bâche anti-éclaboussures (76) est retenue.

10. Installation de lavage de véhicule selon l'une quelconque des revendications précédentes, **caractérisée en ce que** le dispositif d'entraînement de moyen de support comprend un dispositif d'enroulement (42) pourvu d'un tambour d'enroulement (44) sur lequel les moyens de support (36, 48) peuvent être enroulés.

11. Installation de lavage de véhicule selon la revendication 10, **caractérisée en ce que** le dispositif d'enroulement (42) est disposé au-dessous des éléments de déviation (38, 40, 50) sur une zone d'extrémité supérieure d'un support (14).
